# EUROPEAN PATENT SPECIFICATION

(11) **EP 0 356 781 B1**
(45) Date of publication and mention of the grant of the patent: **15.12.1993**
(21) Application number: 89114806.6
(22) Date of filing: 10.08.1989
(51) Int. Cl.: C05F 7/00

(54) **Process for treating organic material**
Verfahren zur Verarbeitung von organischem Material
Procédé de traitement de matière organique

(30) Priority: 11.08.1988 ZA 885934
(43) Date of publication of application: 07.03.1990
(73) Proprietor: TOM HOLDINGS LIMITED, St. Hélier Jersey Channel Island (GB)
(72) Inventor: Du Plessis, Jan Abraham, Bronkhorstspruit Transvaal Province (ZA)
(74) Representative: Türk, Gille, Hrabal, Leifert

(56) References cited:
- WO-A-81/02888
- DE-A- 2 746 752
- US-A- 3 775 132
- US-A- 4 743 287

## Description

THIS INVENTION relates to a process for sterilizing and disinfecting sewage sludge.

The Applicant is aware of WO 8102888 which teaches flocculating activated or humus sludge, which has been thickened to a solids content of at least 2%, by treatment with a base to raise the pH of the thickened sludge to more than 8, and then with an acid to lower the pH to 1 to 4. Sufficient base is used so that the sludge gels. The Applicant is also aware of US 4743287 which teaches a method of forming a humic acid fertilizer. The method includes analyzing an organic material to determine the proportion of major inorganic elements such as nitrogen, phosphate, potash and sulphur therein, mixing trace amounts of the major elements with the organic material, adding water thereto, and then treating this mixture sequentially either with an acid followed by a base such as ammonia, or a base followed by an acid. It deals in detail with the combination of treating the material first with the acid and then with the base, but deals in substantially less detail with the combination where the material is treated first with the base and then with the acid. Moreover, it teaches that the combination of the base treatment followed by acid treatment is utilized only when the raw material has a high lignin and cellulose content. Neither of these patents teach a process for sterilizing and disinfecting sewage sludge, in accordance with the present invention.

According to the invention, there is provided a process for sterilizing and disinfecting sewage sludge, which comprises in sequential order
admixing raw, activated or digested sewage sludge containing from about 2% to 50% by mass of solid waste material, with ammonia and;
admixing an inorganic acid with the sewage sludge-ammonia admixture,
which is characterized in that
(a) the ammonia is in the form of anhydrous ammonia gas;
(b) a sufficient quantity of the anhydrous ammonia gas is used to increase the pH of the sludge to about 11,6 and the temperature of the sludge by between 30° and 60°;
(c) sufficient of the inorganic acid is used to substantially neutralize the sewage sludge-ammonia admixture to a pH of about 7;
(d) sufficient of the inorganic acid is used to increase the temperature of the admixture to at least 65°C; and
(e) the amount of the acid used is less than that stoichiometrically required to react with the ammonia gas added thereto,
   so that a substantially sterilized, disinfected sludge is obtained.

The slurry thus comprises 2% to 50% by mass organic solids in water. The slurry may comprise 10%-30% by mass, typically about 15% by mass solids, based on the total slurry mass, in water. The sterilized disinfected sludge may also be enriched, depending on the degree of treatment, the manner in which the temperature is raised, etc. The end material can thus be suitable for use as a fertilizer.

The process may include passing the sewage sludge along a passageway, eg along a pipe reactor, with the raising of the pH being effected in a first zone of the passageway and the addition of the acid to a second zone of the passageway. The zones may be spaced a sufficient distance apart so that the ammonia can react with the sludge for at least 5 minutes before the acid addition takes place. In one embodiment of the invention, the passageway may be of generally elongate form. In another embodiment of the invention, it may be of convoluted form.

It is necessary to raise the pH to about 11,6, since high pH is in part responsible for the sterilization achieved with the process according to the invention, and at a pH of about 11,6 an acceptable reaction time is achieved, ie an excessively long reaction time is avoided.

To raise the pH of the organic material, anhydrous ammonia gas is thus used. It is further believed that the ammonia also functions by forming NH₄OH as an intermediate, with the NH₄OH molecules reacting, it is believed, with the organic material. The ammonia may be injected into the sludge. The ammonia injection is preferably effected in such a manner that intimate admixture thereof with the sludge takes place. For example, this may be effected by injecting the ammonia through a nozzle, with the sludge flow along the passageway being turbulent. Instead, or additionally, the method may include agitating the sludge as the ammonia is injected, to effect the intimate admixture. The Applicant believes that a pipe reactor is particularly suitable since it is easy to pressurize to effect efficient contact of the ammonia with the sludge, and is relatively inexpensive to construct and operate.

Typically, the amount of ammonia added may be in the region of from 0,2% to 20% (by mass) ammonia, based on the total mass of sludge. It is thus important that all the sludge be treated with the ammonia since at least part of the sterilization achieved with the process is due to the ammoniation of the organic material in the sludge.

The sludge may be allowed to react with the ammonia for between 5 and 20 minutes, eg for about 10 minutes, before the acid addition is effected.

The acid may be an inorganic acid. The inorganic acid may be phosphoric acid and/or nitric acid, the use of which also results in nutrients, ie phosphorus or nitrogen, being added to the sludge. The acid introduction, which may also be by way of injection, is also preferably effected in such a manner that intimate admixture thereof with the sludge takes place. It may also be effected by injecting the acid through a nozzle and/or by agitating the sludge while the addition takes place. The acid may be in the form of a dilute solution, eg a 21% (by mass) P solution.

Sufficient acid is thus injected to neutralize the ammonia, and to provide the resultant slurry temperature of at least 65°C. The slurry temperature can hence be raised, if necessary, by introducing more ammonia, so that more acid is then required to react exothermically with the ammonia to neutralize it, resulting in a higher slurry temperature, but the slurry temperature should preferably not exceed 130°C, at a pressure of 1-3 bar(g), since this will give rise to gas or vapour formation. The mass ratio of ammonia to acid solution (21% P) may be in the range 15:100 to 25:100, typically about 20:100. However, the ammonia/acid ratio can be varied as desired, depending on the intended end use of the treated sludge, eg whether a pasteurized and/or enriched final product is also required, as well as what degree of treatment thereof is required, eg degree of enrichment.

The process may also include drying, eg evaporating, the sludge and/or adding at least one further additive, eg a nitrate, depending on the intended end use of the treated sludge.

In one embodiment of the invention, the process can be continuous. In another embodiment of the invention, it can be a batch process.

The invention will now be described by way of example, with reference to the accompanying drawings.

In the drawings,
FIGURE 1 shows a simplified flow diagram of a process for sterilizing and disinfecting sewage sludge, according to the invention;
FIGURE 2 shows a longitudinal sectional view of part of a pipe reactor for use in the process of Figure 1; and
FIGURE 3 shows, diagrammatically, a longitudinal sectional view of another pipe reactor for use in the process of Figure 1.

In the drawings, reference numeral 10 generally indicates a continuous process for sterilizing and disinfecting sewage sludge, in accordance with the invention.

The process 10 includes an initial thickening stage 12, into which leads a flow line 14. The thickening stage can comprise conventional thickening means, eg mechanical thickening means such as centrifugation equipment, or settling means. The thickening stage 12 is only required if the incoming sludge indeed requires thickening and can thus be omitted, if desired. Typically, raw sewage sludge can have a solids concentration of 0,01-5%, typically 3-5%, by mass, and it is then thickened in the stage 12 to have a solids content of about 15% by mass.

The thickened slurry passes along a flow line 16 fitted with a pump 18 into a pipe reactor 20 or 60 at substantially ambient temperature, or at the temperature at which it emerges from the stage 12, ie the stream is not heated up prior to entering the pipe reactor. The pipe reactor can be of generally elongate or convoluted form, and operates at a pressure of about 1-3 bar(g). The pipe reactor is sized such that sludge flow along it is turbulent. The pipe reactor dimensions will thus be selected by simple trial and experiment, to achieve a desired degree of treatment for a particular sludge flow rate. It is believed that the velocity through the reactor should not exceed 1 m/s to maintain the turbulent flow necessary for good mixing and good heat exchange as described in more detail hereinafter with reference to the reactor 60. For similar reasons it is preferred that the diameter of the pipe constituting the pipe reactor should not exceed 15 cm.

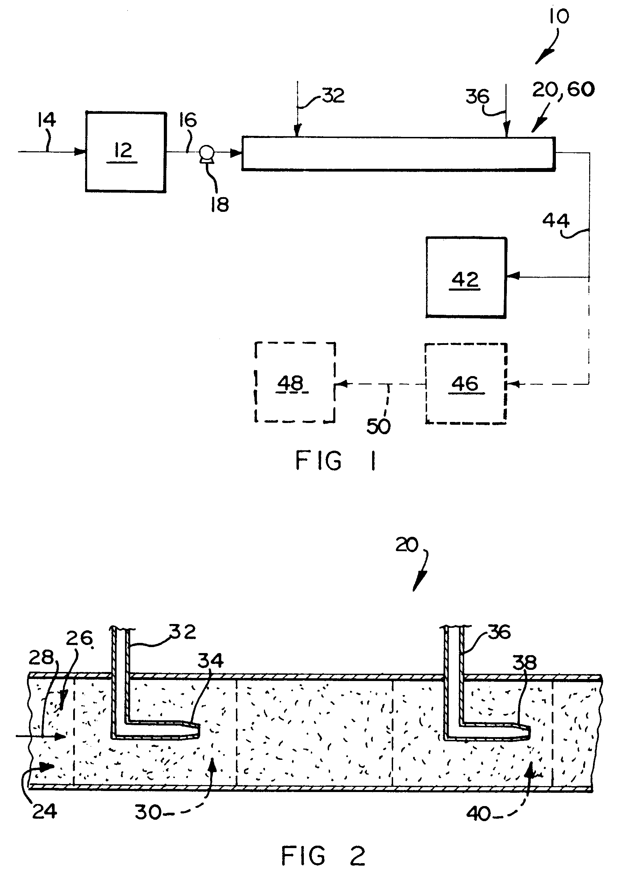

With particular reference to Figure 2, the pipe reactor 20 defines a flow passageway 24 along which the sewage sludge 26 flows in the direction of arrow 28. In a first zone 30 of the flow passageway 24, gaseous ammonia is injected into the sludge or slurry 26 through a nozzle 34 fitted to a conduit 32 connected to a supply or source of ammonia under pressure (not shown). The ammonia is not heated up prior to being injected into the slurry, save for the heat required to gasify liquid ammonia when it is supplied in liquid form. This can be achieved by passing an air stream over a coil through which the ammonia passes. The nozzle 34 is such that intimate admixing of the ammonia with the slurry takes place. If desired, additional agitation, eg a mechanical agitation device (not shown) may be provided in the pipe reactor in proximity to the zone 30. Sufficient ammonia is added in the zone 30 to raise the pH of the slurry intermediate formed in the zone 30 to at least 10, typically about 11,6. Some exothermic reactions between the ammonia and the constituents of the slurry also takes place so that some degree of heating of the slurry also normally takes place in the zone 30. In addition, the slurry can be heated by utilizing the heat of reaction as hereinafter described with reference to the reactor 60. However, no extraneous heating takes place in the zone 30 and the degree of heating is usually such that the slurry temperature is raised by between 5 and 60°C, eg about 40°C.

Another zone 40 is located sufficiently downstream of the zone 30 such that the ammonia can react with the organic material for about 10 minutes before entering the zone 40. The ammonia is usually allowed to react with the organic material in the zone between the zones 30, 40 without addition of any further reactants. However, if desired an additive, such as a sterilizing agent, eg hydrogen peroxide or ozone, can be added between the zones 30, 40.

In the zone 40, phosphoric acid is injected into the slurry intermediate through a nozzle 38 fitted to a conduit 36 connected to a source or supply of phosphoric acid. The phosphoric acid can be in concentrated or dilute form, eg a dilute phosphoric acid solution containing about 21% P (by mass). Again, the nozzle 38 is such that intimate admixing of the phosphoric acid with the slurry takes place. Agitation by means of a mechanical agitation device (not shown) may be effected in proximity to the zone 40 if desired.

Sufficient acid is added in the zone 40 to neutralize the ammonia in the slurry, so that the pH of the treated slurry leaving the zone 40 is about 7. An exothermic reaction between the ammonia and the acid takes place in the zone 40, resulting in heating of the sludge. No extraneous heating of the sludge is necessary. The slurry should be heated to a temperature of at least 65-70°C. Hence, if the temperature is too low, additional ammonia can be introduced into the zone 30, so that more acid then has to be added in the zone 40, leading to an increase in the treated slurry temperature.

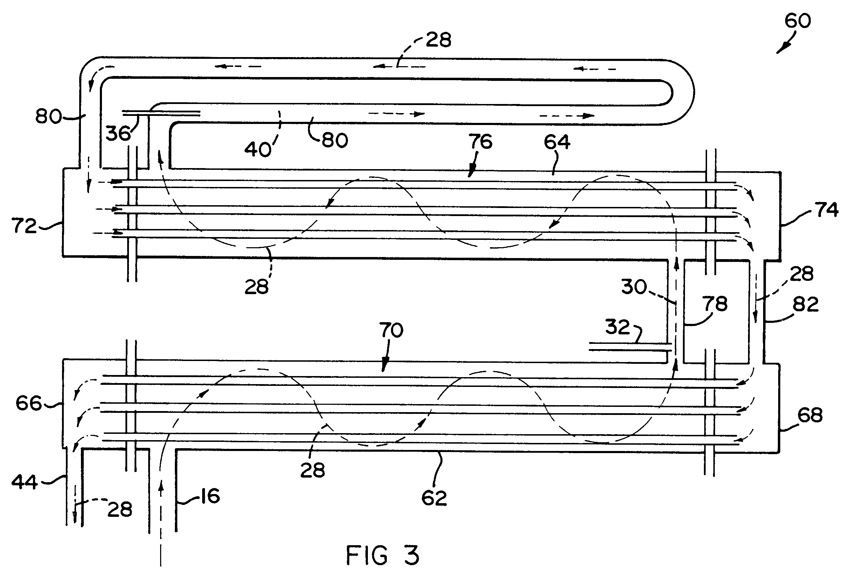

With particular reference to Figure 3, the pipe reactor 60 includes two parallel lengths of pipe or conduit 62, 64.

The one end of the pipe 62 is closed off with a header or end cap 66, while its other end is closed off with a header or end cap 68. A tube bundle 70 extends through the pipe 62 so that the inside of the header 66 is in communication with the inside of the header 68 by means of the interior of the tubes of the tube bundle. The flow line 44 leads from the header 66, while the flow line 16 leads into the pipe 62 near its end to which the header 66 is fitted.

The one end of the pipe 64 is closed off with a header or end cap 72, while its other end is closed off with a header or end cap 74. A tube bundle 76 extends through the pipe 64 so that the inside of the header 72 is in communication with the inside of the header 74 through the tubes of the tube bundle.

A conduit 78 interconnects one pair of ends of the pipes 62, 64 with the ammonia injection conduit 32 leading into the conduit 78.

A conduit 80 leads from the other end of the pipe 64, with the acid injection conduit 36 leading into the conduit 80. The conduit 80 leads into the header 72. A conduit 82 interconnects the headers 74, 68.

Thus, sewage sludge enters the one end of the pipe 62 via the flow line 16, typically at a temperature of about 15°C. The sludge is heated up in the pipe 62, by counter current heat exchange with material passing along the tubes of the tube bundle 70. Heated sludge, typically having a temperature of about 20°C, enters the conduit 78. The conduit 78, in which ammonia is injected into the sludge, hence constitutes the zone 30. At the point where the sludge enters the pipe 64, it typically has a temperature of 50-60°C, the rise in temperature being due to exothermic reactions of the ammonia with organic material in the sludge. The sludge is heated further as it passes along the pipe 64, by counter current heat exchange with material passing along the tubes of the tube bundle 76. This sludge has a high pH of about 11,6.

The sludge exits the pipe 64 through the conduit 80 and 21% P phosphoric acid is injected into it through the conduit 36. The conduit 80 hence constitutes the zone 40. The temperature of the sludge increases to 65-70°C in the conduit 80, while its pH is lowered to about 7.

The neutralized sludge passes through the tube bundle 76, into the header 74, through the conduit 82, into the header 68, through the tube bundle 70, into the header 66, and then into the flow line 44. It hence serves to heat up the sewage sludge passing through the reactor, while it is cooled down, typically to about 40°C. Hence, the heat generated by the exothermic reactions which take place is used to heat up the incoming sludge.

The process 10 can be controlled by monitoring the temperature of the slurry leaving the zone 40. However, instead, the process 10 can be controlled in any other suitable fashion. Instead of the phosphoric acid, nitric acid can be used.

The Applicant believes that the acid, by neutralizing the ammonia, serves to prevent the nitrogen provided by the ammonia from evaporating. The ammonia provides, primarily, sterilization, pasteurization and disinfection, as well as a degree of enrichment.

Typically between 0,2 and 20% by mass ammonia, based on the raw slurry mass, is added to the zone 30, with the mass ratio of 21% P acid to ammonia being about 100:19. This is less than the stoichiometric amount of 21% P acid required to react with the ammonia (about 100:8), since some of the ammonia, as mentioned hereinbefore, reacts with the organic material itself.

The resultant treated slurry will be sterilized, pasteurized, disinfected, and enriched, with the desired degree of such sterilization, pasteurization, disinfection and enrichment typically being controlled by varying the temperature of the slurry merging from the zone 40, as hereinbefore described.

The Applicant also believes that the treated slurry will be suitable for use as a fertilizer, and can hence, if desired, be dried, eg by evaporation (not shown). However, the treated slurry can also be used as such as a liquid fertilizer and can hence pass directly to a storage vessel 42 along a flow line 44.

If desired, a further nutrient, eg a nitrate, can be added to the slurry before or after such drying. Still further, the sludge can be admixed with an absorbent substance, such as vermiculite, in a drying stage 46 (indicated in broken line in Figure 1) resulting in drying of the material, before passing to storage 48 along a flow line 50.

The Applicant believes that the process 10 will give rise to, amongst others, the following advantages:
- enrich or increase the nutrient value, ie P and/or N, of the organic material, ie the sludge, which can hence, as mentioned hereinbefore, be used as a fertilizer;
- the material is sterilized;
- the material is deactivated, eg it is then virtually odourless, even when used as a fertilizer;
- it can handle a variety of sludges, eg primary, activated or digested sewage sludges;
- the process is less capital intensive than known processes for treating sewage sludge, eg a digester stage is not required;
- the process is less expensive to operate than known processes, eg no running costs normally incurred in running a digester are incurred, B.O.D. is lowered, and the sludge is converted directly to liquid fertilizer;
- the process provides a relatively inexpensive yet effective means of enriching sewage sludge;
- since the resultant sludge has high or concentrated P and/or N values, the sludge when used as a fertilizer can be applied at much lower application rates per hectare (to obtain the same degree of fertilization) than with low P and/or N value sludges obtained from known process, resulting in potential toxic elements, eg heavy metals, found in sludges being applied at much lower rates than with the sludges from conventional processes, so that it will take much longer to lay down the maximum permitted amounts of such elements;
- N and/or P is added chemically, ie is provided in quick release form when the resultant product is used as fertilizer, so that the sludge can be applied at lower application rates than is the case with sludges having only organic N and/or P.

The effect of treating sewage sludge in accordance with the process 10 can be seen from Table 1, in which the same initial raw sewage sludge was used for Samples A and B. In the case of Sample A, the sludge was treated in accordance with process 10, dried and analyzed, while in the case of Sample B, the sludge was merely dried and analyzed with no treatment thereof (all percentages on mass basis):

**Table 1**

| | A | B |
|---|---|---|
| Nitrogen (% N) | 11,80 | 3,18 |
| Phosphorus (% P) | 21,44 | 1,23 |
| Potassium (% K) | 0,06 | 0,31 |
| Calcium (% Ca) | 0,20 | 2,00 |
| Magnesium (% Mg) | 1,27 | 0,27 |
| Sodium (% Na) | 0,06 | 0,27 |
| Chloride (% Cl) | 0,03 | 0,15 |
| Sulphur (% S) | 0,94 | 0,75 |
| Iron (ppm Fe) | 6600 | 11925 |
| Manganese (ppm Mn) | 394 | 306 |
| Copper (ppm Cu) | 64 | 325 |
| Zinc (ppm Zn) | 163 | 975 |
| Aluminium (ppm Al) | - | - |
| Boron (ppm B) | - | 28,75 |
| Molybdenum (ppm Mo) | - | 20,00 |
| Moisture (%) | 85,12 | 99,04 |
| Dry Material (%) | 14,88 | 0,96 |

Hence, these results indicate the degree of enrichment obtainable with the process 10, as well as the 'dilution' of potential toxic elements such as iron, copper and zinc which is obtainable.

The degree of sterilization obtainable with the process 10 was also determined. This was done by taking samples of both treated and untreated sewage sludge and testing them in respect of eggs of the intestinal nematode Ascaris lumbricoides which are extremely durable and resistant. If these ova are hence present in sewage sludge and are killed by the treatment process, it follows that other human pathogens which are less resistant and which may also be present, such as parasites, viruses and bacterial, will have been inactivated. Ascaris can hence be used as an 'indicator' organism.

Ascaris eggs were isolated using the Helminth Filter (South African Medical Journal, 1972, 46:1344-1346), and modified formal-ether and zinc sulphate concentration methods (Journal of Clinical Pathology, 1970, 23:545-546; Laboratory Methods in 'Colour Atlas of Intestinal Parasites', pp 9-21, published in 1971 by Charles C Thomas, Illinois, USA; Water Research, 1974, 8:851-853). Essentially, eggs from sludge samples treated in accordance with the process 10, ie so called activated sludge pasteurization-treated eggs ('ASP eggs') and control eggs from untreated samples of the same sludges ('untreated eggs') were incubated in 1% formalin (to inhibit bacterial multiplication) at 30°C for 18 days or more. The ova were then examined to see if larval development had taken place inside them, and if so, whether or not the lava were viable. To determine whether an Ascaris egg was viable, it was examined to establish whether not a mobile larva was present inside it. This involved prolonged examination using light microscopy, with the application of stimulation if necessary. However, as will be seen from Table 2 hereunder, lava did not develop in the ASP eggs exposed to the processing conditions of the process 10, as compared to the untreated eggs.

| Table 2 | | | | |
|---|---|---|---|---|
| Sample | % solids | Ova per 1 g wet weight | Percentage viability | Remarks |
| A1 | 9.1 | 4* | 0* | 0% obtained in 2 repeats of viability tests. |
| B1 | 9.3 | 3* | 0* | 0% obtained in 2 repeats of viability tests. |
| C1 (Control) | 2.8 | 11 | 85 | 2 repeats gave 85% and 90% |
| D1 (Control) | 3.5 | 16 | 84 | 2 repeats gave 85% and 87% |
| E (Control) | 3.3 | 13 | 83 | Viability count done on 200 ova |
| F | 9.8 | 7 | 0 | Viability count done on 300 ova |
| G | 9.5 | 5 | 0 | Viability count done on 300 ova |
| H1 (Control) | 2.6 | 16 | 94 | **213 ova used for viability |
| H2 | 18.0 | 8 | 3 | **203 ova used for viability |
| H3 | 19.6 | 19 | 0*** | 400 ova used for viability |
| H4(1) | 7.0 | 9 | 0*** | 322 ova used for viability |
| H4(2) | 8.0 | 10 | 0*** | 100 ova used for viability |
| LEGEND | | | | |
| (i) The "% solids" was determined after baking 100 g of the sample at 100°C for 24 hours in order to dry it out. For viability studies, approximately 100 to 150 g of specimen are washed using the Helminth Filter which was developed locally. The material thereby obtained was incubated in 1% formalin (to inhibit bacterial multiplication) at 30°C for 18 days. After incubation, Ascaris ova were recovered by centrifugal flotation. Ova were then examined to see if larval development had taken place inside them; and the percentage viability was determined. | | | | |
| (ii) *95-98% of ova observed in samples A1 and B1 showed obvious mechanical damage prior to incubation; and no development occurred in the remaining eggs after incubation for viability studies. | | | | |
| (iii) **Motile larvae were observed. | | | | |
| (iv) ***All ova examined were undeveloped. | | | | |

From Table 2, it can thus be seen that substantially all Ascaris ova are killed off in the process 10.

Hence, the Applicant believes that with the process 10, disadvantages of known processes for treating sewage sludge of which it is aware such as the problems of economically producing totally sterile sludge suitable for use directly as a fertilizer, in particular a fertilizer with which permitted amounts of potential toxic elements will not easily be exceeded, are overcome.

## Claims

1. A process (10) for sterilizing and disinfecting sewage sludge, which comprises in sequential order
admixing raw, activated or digested sewage sludge containing from about 2% to 50% by mass of solid waste material, with ammonia (32) and;
admixing an inorganic acid (36) with the sewage sludge-ammonia admixture,
is characterized in that
(a) the ammonia is in the form of anhydrous ammonia gas;
(b) a sufficient quantity of the anhydrous ammonia gas is used to increase the pH of the sludge to about 11,6 and the temperature of the sludge by between 30° and 60°;
(c) sufficient of the inorganic acid is used to substantially neutralize the sewage sludge-ammonia admixture to a pH of about 7;
(d) sufficient of the inorganic acid is used to increase the temperature of the admixture to at least 65°C; and
(e) the amount of the acid used is less than that stoichiometrically required to react with the ammonia gas added thereto,
so that a substantially sterilized, disinfected sludge is obtained.

2. A process according to Claim 1, characterized therein that the admixture of the sewage sludge and the ammonia is allowed to react for at least 5 minutes, at a pressure of about 1-3 bar(g), prior to the admixing therewith of the inorganic acid, with the inorganic acid being phosphoric acid, nitric acid or a mixture thereof.

3. A process according to Claim 1 or Claim 2, characterized in that the quantity of anhydrous ammonia gas used is sufficient to raise the temperature of the sewage sludge-ammonia admixture to between 50° and 60°.

4. A process according to any one of Claims 1 to 3 inclusive, characterized in that
(a) the sewage sludge is conveyed through a passageway (24);
(b) the anhydrous ammonia gas is introduced into the sludge with mixing in a first zone (30) of the passageway;
(c) the admixing of the inorganic acid with the sewage sludge-ammonia admixture is effected in a second zone (40) of the passageway located downstream of the first zone; and
(d) sufficient inorganic acid is used to increase the temperature of the sewage sludge-ammonia admixture to between 70° and 130°C.

5. A process according to Claim 4, characterized in that the neutralized sewage sludge is cooled to about 40°C before discharge from the passageway.

6. A process according to Claim 4 or Claim 5, characterized in that the passageway is of such a size that the sludge is conveyed through the passageway at turbulent flow.

7. A process according to any one of Claims 4 to 6 inclusive, characterized in that the passageway is a convoluted pipe reactor (60).

8. A process according to any one of Claims 1 to 3 inclusive, characterized in that the admixing of the ammonia gas with the sludge is effected by injecting the gas into the sludge while agitating the sludge so as to create an intimate admixture of the ammonia gas and the sludge.

9. A process according to any one of Claims 1 to 3 inclusive, characterized in that the admixing of the ammonia gas with the sludge is effected by injecting it into the sludge while the sludge is in turbulent flow condition so as to create an intimate admixture of the ammonia gas and the sludge.

## Patentansprüche

1. Ein Verfahren (10) für die Sterilisation und Desinfektion von Klärschlämmen, das nacheinander folgende Schritte umfaßt:
Vermischung mit Ammoniak (32) von rohem aktivierten oder ausgefaultem Klärschlamm, der etwa 2% bis 50 Masse-% festes Abfallmaterial enthält; und
Zugabe einer anorganischen Säure (36) zu der Mischung aus Klärschlamm und Ammoniak,
**dadurch gekennzeichnet**, **daß**
(a) das Ammoniak in Form von wasserfreiem Ammoniakgas vorliegt;
(b) eine ausreichende Menge des wasserfreien Ammoniakgases dafür verwendet wird, um den pH-Wert des Klärschlammes auf etwa 11,6 und die Temperatur des Klärschlammes auf einen Wert zwischen 30° und 60° C anzuheben;
(c) eine ausreichende Menge der anorganischen Säure dafür verwendet wird, um die Mischung aus Klärschlamm und Ammoniak auf einen pH-Wert von etwa 7 zu neutralisieren;
(d) eine ausreichende Menge der anorganischen Säure dafür verwendet wird, um die Temperatur der Mischung auf mindestens 65° C anzuheben; und
(e) die Menge der eingesetzten Säure geringer ist als stöchiometrisch erforderlich, um mit dem beigemischten Ammoniakgas zu reagieren,
so daß ein weitgehend sterilisierter und desinfizierter Schlamm erhalten wird.

2. Verfahren nach Anspruch 1,
**dadurch gekennzeichnet**, **daß** man die Mischung aus Klärschlamm und Ammoniak für eine Dauer von mindestens 5 Minuten bei einem Druck von 1 bis 3 bar(g) reagieren läßt, bevor die anorganische Säure zugegeben wird, wobei diese anorganische Säure eine Phosphorsäure, eine Salpetersäure oder eine Mischung dieser Säuren ist.

3. Verfahren nach einem der Ansprüche 1 oder 2,
**dadurch gekennzeichnet**, **daß** die Menge des eingesetzten wasserfreien Ammoniakgases ausreichend ist, um die Temperatur der Mischung aus Klärschlamm und Ammoniak auf einen Wert zwischen 50° und 60° C anzuheben.

4. Verfahren nach einem der Ansprüche 1 bis 3,
**dadurch gekennzeichnet**, **daß**
(a) der Klärschlamm durch einen Kanal (24) geleitet wird;
(b) das wasserfreie Ammoniakgas in einer ersten Zone (30) des Kanals in den Klärschlamm eingeleitet und damit vermischt wird;
(c) die Vermischung der anorganischen Säure mit der Mischung aus Klärschlamm und Ammoniak in einer zweiten Zone (40) des Kanals unterhalb der ersten Zone durchgeführt wird; und daß
(d) eine ausreichende Menge der anorganischen Säure dafür verwendet wird, um die Temperatur der Mischung aus Klärschlamm und Ammoniak auf einen Wert zwischen 70° und 130° C anzuheben.

5. Verfahren nach Anspruch 4,
**dadurch gekennzeichnet**, **daß** der neutralisierte Klärschlamm auf etwa 40° C abgekühlt wird, bevor er aus dem Kanal abgelassen wird.

6. Verfahren nach einem der Ansprüche 4 oder 5,
**dadurch gekennzeichnet**, **daß** der Kanal eine Abmessung hat, die es erlaubt, den Klärschlamm in Form einer turbulenter Strömung durch den Kanal zu leiten.

7. Verfahren nach einem der Ansprüche 4 bis 6,
**dadurch gekennzeichnet**, **daß** der Kanal ein schraubenförmiger Röhrenreaktor (60) ist.

8. Verfahren nach einem der Ansprüche 1 bis 3,
**dadurch gekennzeichnet**, **daß** die Vermischung des Ammoniakgases mit dem Klärschlamm durch Einblasen des Gases in den Klärschlamm erfolgt, während dieser gerührt wird, um eine innige Vermischung des Ammoniakgases mit dem Klärschlamm herzustellen.

9. Verfahren nach einem der Ansprüche 1 bis 3,
**dadurch gekennzeichnet**, **daß** die Vermischung des Ammoniakgases mit dem Klärschlamm durch Einblasen des Gases in den Klärschlamm durchgeführt wird, während sich der Klärschlamm in einem turbulenten Strömungszustand befindet, um so eine innige Vermischung des Ammoniakgases mit dem Klärschlamm herzustellen.

## Revendications

1. Procédé de stérilisation et désinfection de boue d'égout qui comprend, en ordre séquentiel, le fait de :
- mélanger de la boue d'égout brute, activée ou putréfiée, contenant d'environ 2 à 50 % en masse de déchets solides, avec de l'ammoniac (32) ; et
- mélanger un acide inorganique (36) au mélange ammoniac - boue d'égout ;
**caractérisé** en ce que :
(a) l'ammoniac est sous forme de gaz ammoniac anhydre,
(b) on utilise une quantité suffisante de gaz ammoniac anhydre pour augmenter le pH de la boue jusqu'à environ 11,6 et la température de la boue de 30 à 60°,
(c) on utilise suffisamment d'acide inorganique pour neutraliser sensiblement le mélange ammoniac-boue d'égout jusqu'à un pH d'environ 7,
(d) on utilise suffisamment d'acide inorganique pour augmenter la température du mélange jusqu'à au moins 65°C, et
(e) la quantité d'acide utilisé est inférieure à celle stoechiométriquement requise pour une réaction avec le gaz ammoniac ajouté,
de sorte que l'on obtient une boue essentiellement stérilisée et désinfectée.

2. Procédé selon la revendication 1, **caractérisé** en ce qu'on laisse réagir le mélange de boue d'égout et d'ammoniac pendant au moins 5 minutes, à une pression d'environ 1 à 3 bars (g), avant d'y ajouter l'acide inorganique, l'acide inorganique étant de l'acide phosphorique, de l'acide nitrique ou un mélange de ceux-ci.

3. Procédé selon la revendication 1 ou la revendication 2, **caractérisé** en ce que la quantité de gaz ammoniac anhydre utilisé est suffisante pour élever la température du mélange ammoniac-boue d'égout jusqu'à entre 50 et 60°.

4. Procédé selon l'une quelconque des revendications 1 à 3 inclus, **caractérisé** en ce que :
(a) la boue d'égout est acheminée par une voie de passage (24),
(b) le gaz ammoniac anhydre est introduit dans la boue par mélange dans une première région (30) de la voie de passage,
(c) le mélange de l'acide inorganique avec le mélange ammoniac-boue d'égout est effectué dans une seconde région (40) de la voie de passage, située en aval de la première région, et
(d) on utilise suffisamment d'acide inorganique pour augmenter la température du mélange ammoniac-boue d'égout jusqu'à entre 70 et 130°C.

5. Procédé selon la revendication 4, **caractérisé** en ce que la boue d'égout neutralisée est refroidie jusqu'à environ 40°C avant d'être évacuée de la voie de passage.

6. Procédé selon la revendication 4 ou la revendication 5, **caractérisé** en ce que la voie de passage a une taille telle que la boue est acheminée à travers la voie de passage avec un écoulement turbulent.

7. Procédé selon l'une quelconque des revendications 4 à 6 inclus, **caractérisé** en ce que la voie de passage est un réacteur (60) à tube en spirale.

8. Procédé selon l'une quelconque des revendications 1 à 3 inclus, **caractérisé** en ce que le mélange du gaz ammoniac avec la boue s'effectue par injection du gaz dans la boue tout en agitant la boue de façon à créer un mélange intime du gaz ammoniac et de la boue.

9. Procédé selon l'une quelconque des revendications 1 à 3 inclus, **caractérisé** en ce que le mélange du gaz ammoniac avec la boue s'effectue par injection de celui-ci dans la boue alors que celle-ci se trouve en situation d'écoulement turbulent de façon à créer un mélange intime du gaz ammoniac et de la boue.
